# EUROPEAN PATENT APPLICATION

(11) **EP 4 628 969 A1**
(43) Date of publication of application: **08.10.2025**
(21) Application number: 22967931.1
(22) Date of filing: 07.12.2022
(51) Int. Cl.: G02B 27/01, G06F 3/01, G06F 3/00, G06F 3/14, G06F 1/16, G06F 3/041, G02C 11/00, G02C 5/22

(54) **ELECTRONIC DEVICE**

(71) Applicant: LG Electronics Inc., Yeongdeungpo-gu Seoul 07336 (KR)
(72) Inventor: CHA, Youngdo, Seoul 06772 (KR); KIM, Minsoo, Seoul 06772 (KR); PARK, Jungil, Seoul 06772 (KR); KIM, Samyoup, Seoul 06772 (KR); JO, Seong, Seoul 06772 (KR)
(74) Representative: Schott, Jakob Valentin
(86) International application number: PCT/KR2022/019841
(87) International publication number: WO 2024/122673

(57) **Abstract**

The present disclosure relates to an electronic device. The electronic device may comprise: a front frame to which a light-transmissive display unit is coupled; temples elongated and connected to the front frame; and temple tips, which are connected to the distal ends of the temples and face the front frame with respect to the temples, wherein the front frame includes: a PCB, which is embedded in the front frame and extends toward the temples from the front frame; and a display panel, which is embedded in the front frame at one side of the display unit and is electrically connected to the PCB, and the temple tips include batteries, which are embedded in the temple tips, are electrically connected to the PCB, and supply power.

## Description

### [TECHNICAL FIELD]

The present disclosure relates to an electronic device. More particularly, the present disclosure relates to an electronic device used in virtual reality (VR), augmented reality (AR), mixed reality (MR), etc.

### [BACKGROUND ART]

Virtual reality (VR) refers to a specific environment or situation which is similar to reality created by artificial technology using a computer, etc., but is not reality or the technology itself.

Augmented reality (AR) refers to technology that combines a virtual object or information with a real environment to make it look like an object in an original environment.

Mixed reality (MR) or hybrid reality refers to technology that combines a virtual world and a real world to make a new environment or new information. In particular, an interaction between in objects which exist in reality and virtuality in real time is referred to as the mixed reality.

A created virtual environment or situation stimulates five senses of a user and makes spatial and temporal experiences similar to the reality, thereby making the user freely enter a boundary between the reality and imagination. The user is capable of interacting with objects implemented in such an environment, such as giving an operation or a command by using a device which actually exists in addition to immersion in such an environment.

In recent years, a research into a gear used in such a technical field has been actively conducted.

### [DETAILED DESCRIPTION OF INVENTION]

### [TECHNICAL PROBLEMS]

In view of the above, the present disclosure solves the above-described problems and other problems.

According to one embodiment of the present disclosure, the present disclosure may provide an electronic device used in virtual reality (VR), augmented reality (AR), mixed reality (MR), etc.

According to one embodiment of the present disclosure, the present disclosure may provide a structure of the electronic device used for the augmented reality (AR).

According to one embodiment of the present disclosure, the present disclosure may provide an ergonomic structure of the electronic device used for the augmented reality (AR).

According to one embodiment of the present disclosure, the present disclosure may provide an ergonomic weight distribution structure of the electronic device used for the augmented reality (AR).

### [TECHNICAL SOLUTION]

In order to the or another object, according to an aspect of the present disclosure, an electronic device may include: a front frame to which a light-transmissive display unit is coupled; temples elongated and connected to the front frame; and temple tips, which are connected to the distal ends of the temples and face the front frame with respect to the temples, the front frame may include: a PCB, which is embedded in the front frame and extends toward the temples from the front frame; and a display panel, which is embedded in the front frame at one side of the display unit and is electrically connected to the PCB, and the temple tips may include batteries, which are embedded in the temple tips, are electrically connected to the PCB, and supply power.

### [EFFECT OF INVENTION]

Effects of the electronic device according to the present disclosure will be described below.

According to at least one of the embodiments of the present disclosure, an electronic device used in virtual reality (VR), augmented reality (AR), mixed reality (MR), etc., can be provided

According to at least one of the embodiments of the present disclosure, a structure of the electronic device used for the augmented reality (AR) can be provided.

According to at least one of the embodiments of the present disclosure, an ergonomic structure of the electronic device used for the augmented reality (AR) can be provided.

According to at least one of the embodiments of the present disclosure, an ergonomic weight distribution structure of the electronic device used for the augmented reality (AR) can be provided.

An additional range of an applicability of the present disclosure will be apparent from the following detailed description. However, since various changes and modifications can be clearly appreciated by those skilled in the art within the spirit and the scope of the present disclosure, the detailed description and a specific embodiment such as a preferred embodiment of the present disclosure should be appreciated as being just given as an example.

### [BRIEF DESCRIPTION OF THE DRAWING]

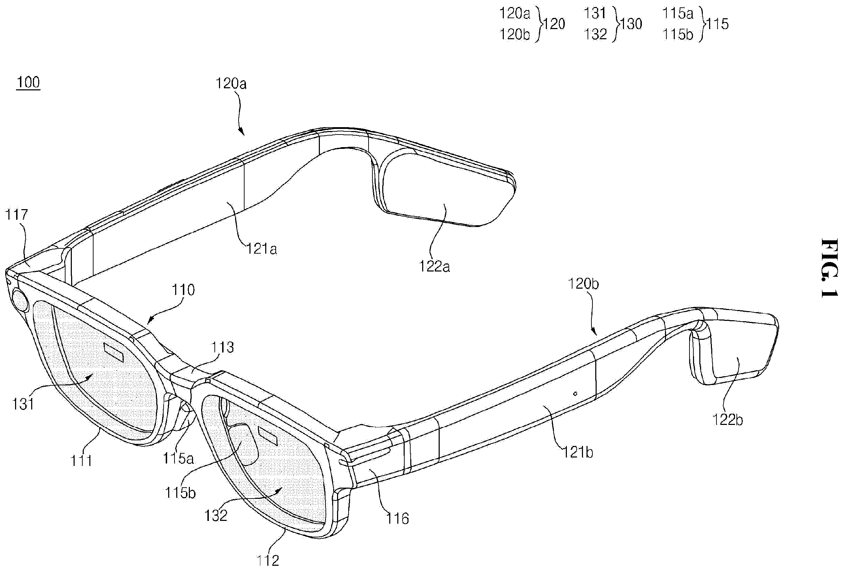

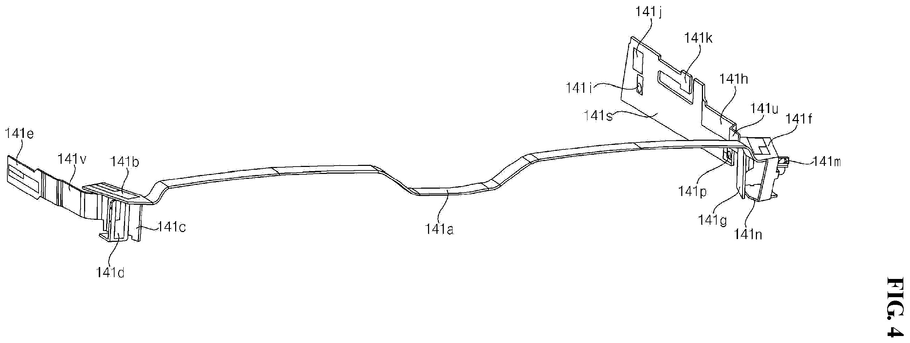

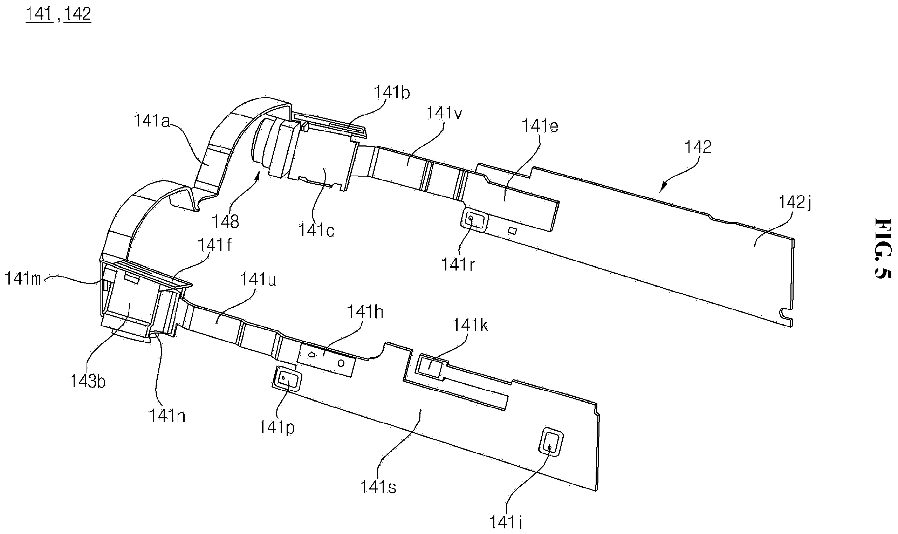

FIGS. 1 to 14 are diagrams illustrating examples of an electronic device according to embodiments of the present disclosure.

### [BEST MODE FOR CARRYING OUT THE INVENTION]

Hereinafter, embodiments disclosed in the present disclosure will be described in detail with reference to the accompanying drawings and the same or similar components are denoted by the same reference numerals regardless of a sign of the drawing, and duplicated description thereof will be omitted.

Suffixes "module" and "unit" for components used in the following description are given or mixed in consideration of easy preparation of the present disclosure only and do not have their own distinguished meanings or roles.

Further, in describing the embodiment of the present disclosure, a detailed description of related known technologies will be omitted if it is determined that the detailed description makes the gist of the embodiment disclosed in the present disclosure unclear. Further, it is to be understood that the accompanying drawings are just used for easily understanding the embodiments disclosed in the present disclosure and a technical spirit disclosed in the present disclosure is not limited by the accompanying drawings and all changes, equivalents, or substitutes included in the spirit and the technical scope of the present disclosure are included.

Terms including an ordinary number, such as first and second, are used for describing various constituent elements, but the constituent elements are not limited by the terms. The terms are used only to discriminate one constituent element from another constituent element.

It should be understood that, when it is described that a constituent element is "connected to" or "accesses" another constituent element, the constituent element may be directly connected to or access the other constituent element or a third constituent element may be present therebetween. In contrast, when it is described that a constituent element is "directly connected to" or "directly accesses" another constituent element, it is understood that no constituent element is present between the constituent element and another constituent element.

A singular form includes a plural form if there is no clearly opposite meaning in the context.

In the present disclosure, it should be understood that term "include" or "have"indicates that a feature, a number, a step, an operation, a component, a part or the combination thereof described in the specification is present, but does not exclude a possibility of presence or addition of one or more other features, numbers, steps, operations, components, parts or combinations thereof, in advance.

Referring to FIG 1, the electronic device 100 may be generally in a shape of glasses or goggles. The electronic device 110 may include frames 110 and 120, and a display unit 130.

The frames 110 and 120 may include a front frame 110, a side frame 120, and a nose support 115. The front frame 110 may include a plurality of rims 111 and 112, a bridge 113, and end pieces 116 and 117. The bridge 113 may connect a first rim 111 and a second rim 112. Shapes of openings of the rims 111 and 112 may correspond to a shape of the display unit 130. For example, the display unit 130 may be coupled to or fixed to the openings of the rims 111 and 112. The first end piece 117 may face the bridge 113 with respect to the first rim 111 and the second end piece 116 may face the bridge 113 with respect to the second rim 112. The front frame 110 may be left-right symmetric around the bridge 113.

The side frame 120 may be coupled to the front frame 110. The side frame 120 may be hinge-connected to the end pieces 116 and 117. For example, a first side frame 120a may be hinge-connected to the first end piece 117 and a second side frame 120b may be hinge-connected to the second end piece 116. The side frame 120 may include temples 121a and 121b and temple tips 122a and 122b. The temples 121a and 121b may be hinge-connected to the end pieces 116 and 117. The temple tips 122a and 122b may be opposite to the end pieces 116 and 117 with respect to the temples 121a and 121b.

The nose support 115 may be coupled to the bridge 113 or the rims 111 and 112. For example, a first nose support 115a may be coupled to a first rim 111 or the bridge 113 and a second nose support 115b may be coupled to a second rim 112 or the bridge 113. Depending on structures of the frames 110 and 120, the nose support 115 may be omitted or integrally formed with the front frame 110.

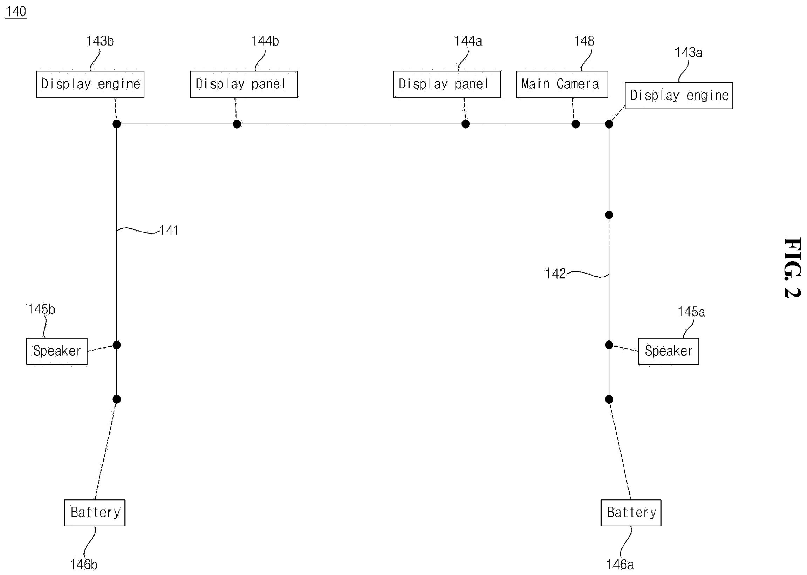

Referring to FIG 2, the electronic device 100 (see FIG 1) may include a main PCB 142 and a sub PCB 141. For example, the main PCB 142 and/or the sub PCB 141 may be a flexible printed circuit board (F-PCB). The sub PCB 141 may be elongated and may be embedded in the frames 110 and 120. For example, the sub PCB 141 may be embedded in the front frame 110, the second end piece 116, and/or the second side frame 120b. As another example, the sub PCB 141 may be embedded in the front frame 110, the first end piece 117, the second end piece 116, the first side frame 120a, and/or the second side frame 120b.

The main PCB 142 may be embedded in the frames 110 and 120, and electrically connected to the sub PCB 141. For example, the main PCB 142 may be embedded in the first side frame 120a and connected to the sub PCB 141.

A first battery 146a may be electrically connected to the main PCB 142 and may supply power to the main PCB 142. A second battery 146b may be electrically connected to the sub PCB 141 and may supply power to the sub PCB 141. A first speaker 145a may be electrically connected to the main PCB 142 and may receive a signal from the main PCB 142 and output a sound. A second speaker 145b may be electrically connected to the sub PCB 141, and may receive the signal from the sub PCB 141 and output the sound.

A first display engine 143a and a second display engine 143b may be electrically connected to the sub PCB 141. A first display panel 144a and/or a second display panel 144b may be electrically connected to the sub PCB 141. The first display engine 143a may provide an image signal, a video signal, or a text signal to the first display panel 144a, and the second display engine 143b may provide the image signal, the video signal, or the text signal to the second display panel 144b. For example, the display panels 144a and 144b may be a micro LED, an OLED, and an OLED on silicon (OLEDos). The display engine 143 and the display panel 144 may be referred to as imaging modules 143 and 144, imaging engines 143 and 144, image generators 143 and 144, or display modules 143 and 144.

Referring to FIG 1 together, the first display engine 143a may be embedded in the first end piece 117 and the first display panel 144a may be embedded in the first rim 111. The second display engine 143b may be embedded in the second end piece 116 and the second display panel 144b may be embedded in the second rim 112. A main camera 148 may be electrically connected to the sub PCB 141, and embedded in the first end piece 117.

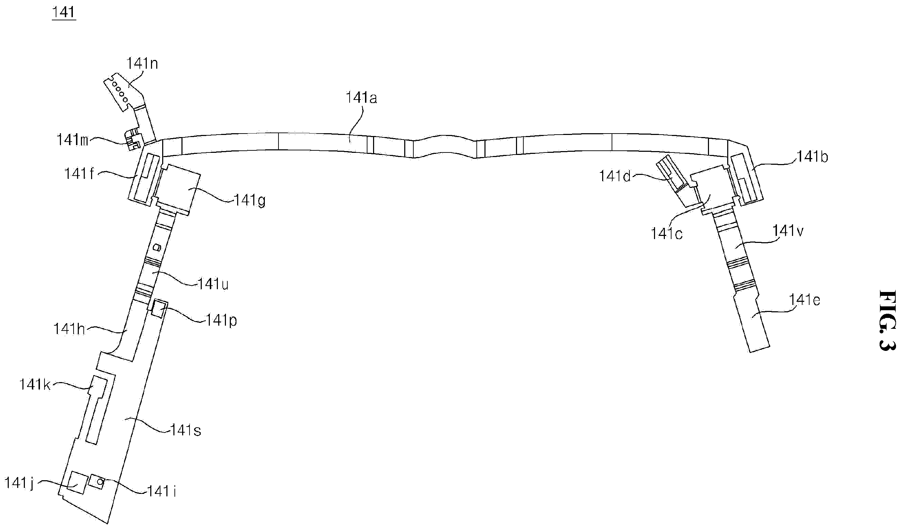

Referring to FIGS. 3 to 5 together with FIG 2, the sub PCB 141 may include a main line 141a, a first display connector 141b, a camera module connector 141d, a first display board 141c, a main board connector 141e, a second display connector 141f, a second display board 141g, a sensor connector 141m, an electrode board 141n, a switching board 141h, a first microphone board 141i, a second power connector 141j, a second microphone board 141k, a third microphone board 141p, and/or a fourth microphone board 141r.

The main line 141a may be elongated and have a width smaller than widths of the rims 111 and 112 of the front frame 110 (see FIG 1). The first display connector 141b may be formed on one end of the main line 141a. The first display panel 144a may be connected to the first display connector 141b. The first display board 141c may be bent and extended from the first display connector 141b. The first display engine 143a including electronic elements for image generation may be mounted on the first display board 141c. For example, an image processing processor, a T-CON board, or the like may be mounted on the second display board 141c.

The camera module connector 141d may be bent and extended from the first display board 141c. The main camera 148 may be connected to the camera module connector 141d. The main board connector 141e may be extended from the first display board 141c. The main board 142 may be connected to the main board connector 141e.

The second display connector 141f may be formed on the other end of the main line 141a. The second display panel 144b may be connected to the second display connector 141f. The second display board 141g may be bent and extended from the second display connector 141f. The second display engine 143b including electronic elements for image generation may be mounted on the second display board 141g. For example, the image processing processor, the T-CON board, or the like may be mounted on the second display board 141g.

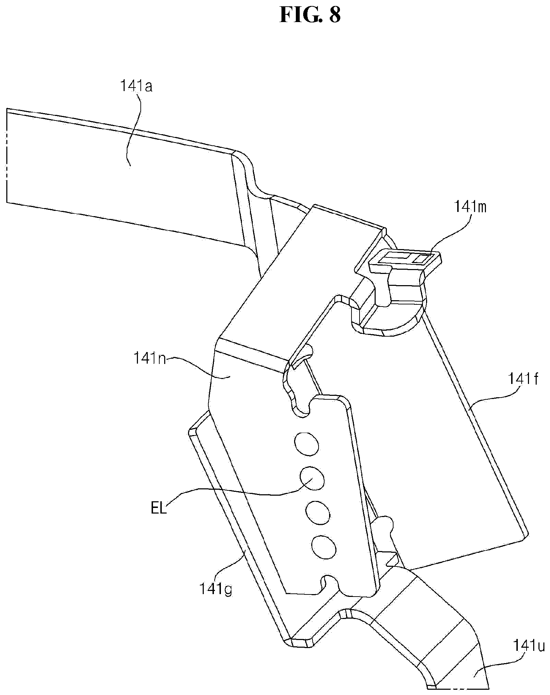

The electrode board 141n may be connected to the main line 141a or the second display connector 141f. The electrode board 141n may be in contact with a device provided externally and electrically connected with the external device. For example, the electrode board 141n may include a plurality of electrodes ELs (see FIG 8).

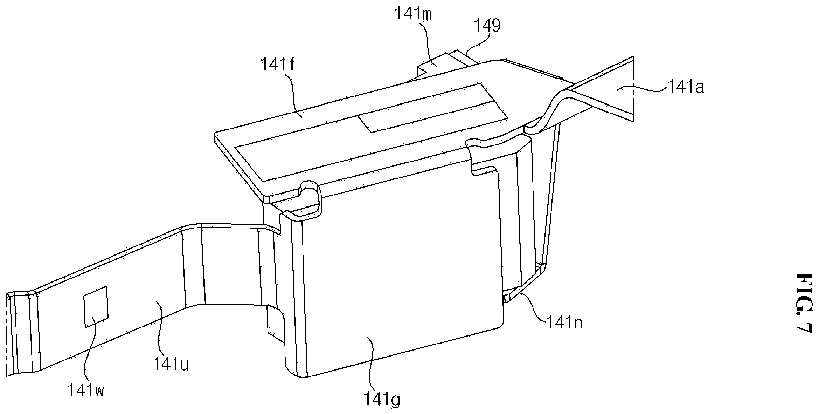

The sensor connector 141m may be connected to the main line 141a or the electrode board 141n. Sensors 149 (see FIG 7) that sense an external environment may be connected to the sensor connector 141m. For example, the sensor 149 may be an illuminance sensor.

The flat board 141s may be connected to the second display board 141g. The second microphone board 141k may be extended on one side of the flat board 141s. The first microphone board 141i may be formed on the flat board 141s. The second power connector 141j may be formed on the flat board 141s. The flat board 141s may be connected to the second display board 141g by a second hinge FPCB 141u. The switching board 141h may be formed on the flat board 141s adjacent the second hinge FPCB 141u. The third microphone board 141p may be formed on the flat board 141s adjacent to the switching board 141h.

The main board connector 141e may be connected to the first display board 141c by a first hinge FPCB 141v. The fourth microphone board 141r may be formed on the main PCB 142 adjacent to the main board connector 141e. The first power connector 142j may be formed on the main PCB 142.

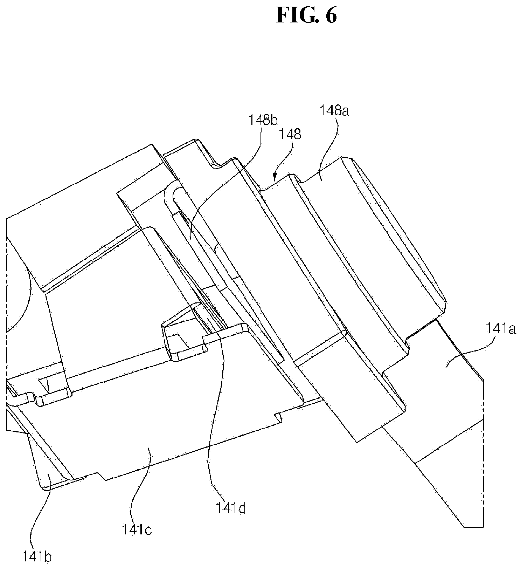

Referring to FIGS. 6 and 7, the main camera 148 may be coupled to the camera module connector 141d. The main camera 148 may include a camera module 148a and a connection electrode 148b. The camera module 148a may include an imaging element, and may convert light flowing from the outside into an electric signal. The connection electrode 148b may be connected to the camera module 148a. The connection electrode 148b may be electrically connected to the imaging element. The connection electrode 148b may be fixed to the camera module connector 141d. The connection electrode 148b may be electrically connected to the camera module connector 141d.

The sensor 149 may be mounted on the sensor connector 141m. The sensor 149 may be electrically connected with the sensor connector 141m. For example, the sensor 149 may be an illuminance sensor 149.

The second display engine 143b including electronic elements for image generation may be mounted on the second display board 141g. For example, the image processing processor, the T-CON board, or the like may be mounted on the second display board 141g.

The hall sensor 141w may be formed or mounted on the second hinge board 141u.

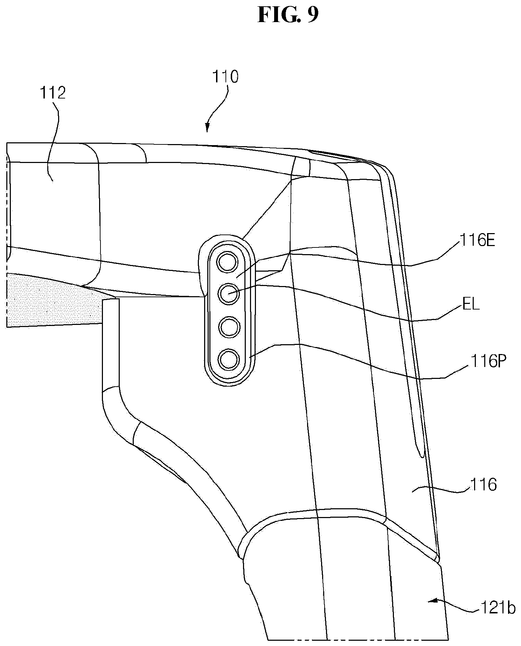

Referring to FIGS. 8 and 9, a plurality of electrodes EL may be fixed to the electrode board 141n. The plurality of electrodes EL may be arranged in line. The plurality of electrodes EL and the electrode board 141n may be located inside the second end piece 116. An electrode opening 116p may be formed in the second end piece 116. The electrode opening 116p may be elongated. An electrode cover 116E may have a shape corresponding to the electrode opening 116p and may be inserted into the electrode opening 116p. The electrode cover 116E may include a plurality of holes. Each of the plurality of holes may correspond to each of the plurality of electrodes EL. The electrodes EL may be exposed to the outside through the plurality of holes of the electrode cover 116E. The electrodes EL may be used for charging or the like of the electronic device 100.

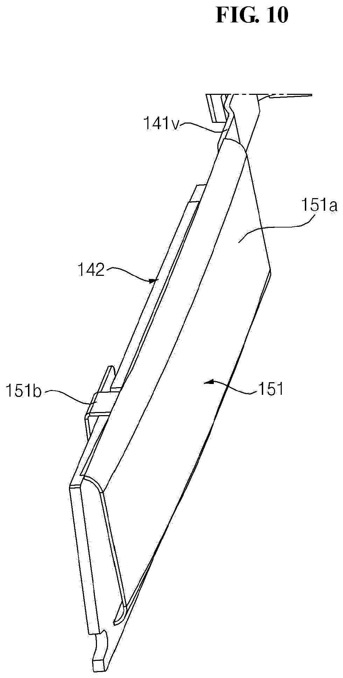

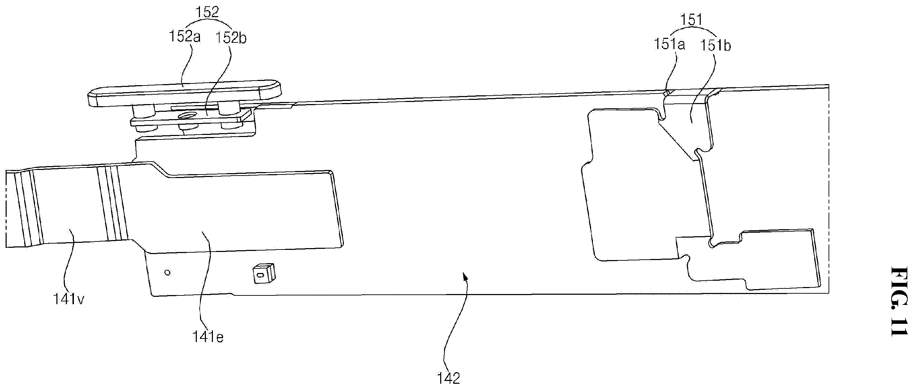

Referring to FIGS. 10 and 11, the touch pad 151 may be connected to the main PCB 142. The touch pad 151 may include a touch panel 151a and a panel electrode 151b. The touch panel 151a may be located on an outer surface of the main PCB 142 and may face the outer surface of the main PCB 142. For example, the touch panel 151a may be a capacitively sensitive panel. As another example, the touch panel 151a may be a capacitively sensitive panel. The panel electrode 151b may electrically connect the main PCB 142 and the touch panel 151a.

The camera switch 152 may be installed in the main PCB 142. The camera switch 152 is located on an upper side of the main PCB 142, and may be electrically connected to the main PCB 142. The camera switch 152 may adjust an operation of the main camera 148. The camera switch 152 may include a button 152a and a switching unit 152b. An electric signal may be generated while the button 152a is pressed and is in contact with the switching unit 152b. For example, the camera switch 152 may act as a shutter button of the camera.

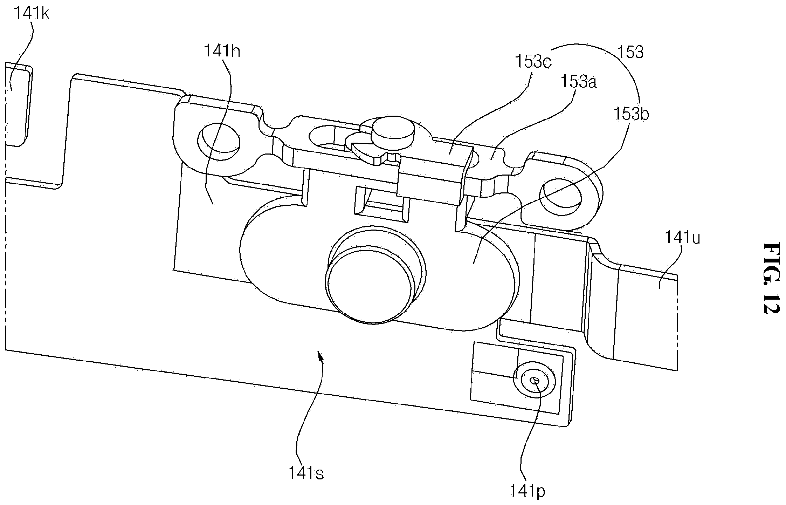

Referring to FIG 12, the power switch 153 may include a base 153a, a switching button 153b, and a connector 153c. The base 153a may be located on an upper side of the flat board 141s. The switching button 153b may move while sliding on the base 153a. The connector 153c may connect the switching button 153b and the base 153a. The switching button 153b may be in electrical contact with the switching board 141h of the flat board 141s. An electrical signal generated by the switching button 153b and the switching board 141h of the flat board 151s may vary depending on a position of the switching button 153b. For example, the switching button 153b may move from the second microphone board 141k toward the second hinge FPCB 141u on the base 153a. When the switching button 153b moves from the base 153a and approaches the second hinge FPCB 141u as much as possible, the electronic device 100 may be turned on. The switching button 153b may be retracted to an original position at the base 153a. An elastic force may be provided to the switching button 153b for restoring the position of the switching button 153b.

For example, when the user pushes the switching button 153b in an intermediate position toward the second hinge FPCB 141u as much as possible to use the electronic device 100, the electronic device 100 may be activated, and the switching button 153b may be restored to the intermediate position. When the user does not use the electronic device 100 for a certain period of time, the electronic device 100 may enter a power saving mode. The user may push the switching button 153b toward the second hinge FPCB 141u to activate the electronic device 100 to use the electronic device 100 again. When the switching button 153b is pushed toward the second microphone board 141k, the electronic device 100 may be deactivated and enter an OFF mode.

As another example, when the user pushes the switching button 153b in the intermediate position toward the second hinge FPCB 141u as much as possible to use the electronic device 100, the electronic device 100 may be activated, and the switching button 153b may be restored to the intermediate position. The user may push the switching button 153b toward the second hinge FPCB 141u to activate a wireless connectivity, in order to connect the electronic device 100 and another device. For example, the wireless connection may be Bluetooth, Wi-Fi, NFC, etc. The power switch 153 may be referred to as a function switch 153.

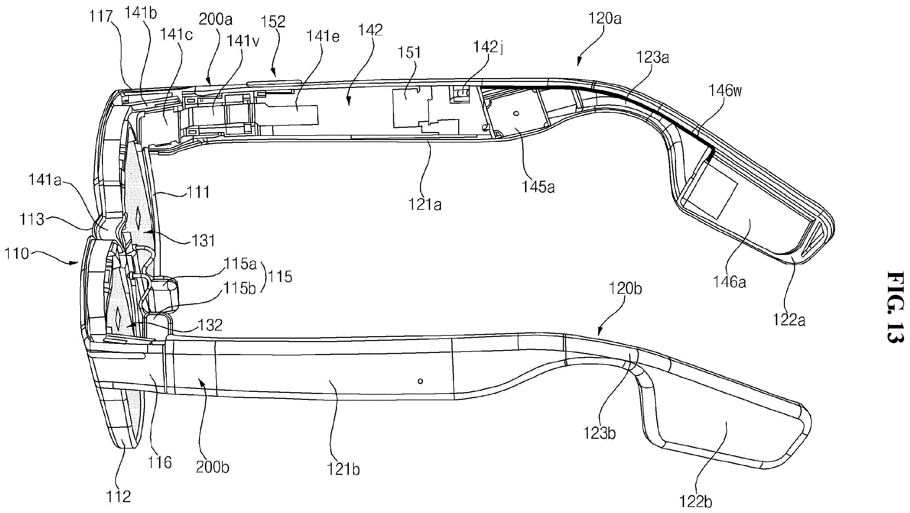

Referring to FIG 13, the main line 141a may be located inside an upper side of the front frame 110. For example, the main line 141a may be embedded above the first rim 111, above the bridge 113, and/or above the second rim 112. The first display connector 141b, the first display board 141c, and/or the camera module connector 141d may be embedded in the first end piece 117. The main PCB 142 may be embedded in the temple 121a of the first side frame 120a. The first side frame 120a may be hinge-connected to the first end piece 117. The first hinge FPCB 141v connecting the first display board 141c and the main PCB 142 may be embedded in the first hinge 200a and/or the temple 121a of the first side frame 120a connecting the first end piece 117 and the first side frame 150a. The camera switch 152 may be exposed to the outside through the temple 121a of the first side frame 120a.

The first speaker 145a may be electrically connected to the main PCB 142 and embedded in the temple 121a of the first side frame 120a. The first battery 146a may be embedded in the temple tip 122a of the first side frame 120a. The first battery 146a may be electrically connected to the main PCB 142 by an electric wire 146w. The first battery 146a may supply power to the main PCB 142.

The side frames 120a and 120b may include ear portions 123a and 123b connecting the temples 121a and 121b and the temple tips 122a and 122b. The electric wire 146w may connect the first battery 146a and the first power connector 142j of the main PCB 142 inside the temple 121a, inside the ear portion 123a, and inside the temple tip 122a of the first side frame 120a.

A weight of the battery 146a may be relatively heavy by other electronic components. The battery 146a may be embedded in the temple tip 122a, and other electronic components may be embedded in the front frame 110 and the temple 121a. As a result, when the user wears the electronic device 100 on his/her face, the weight of the electronic device 100 is distributed around the user's ear, so that the electronic device 100 may be stably worn by the user.

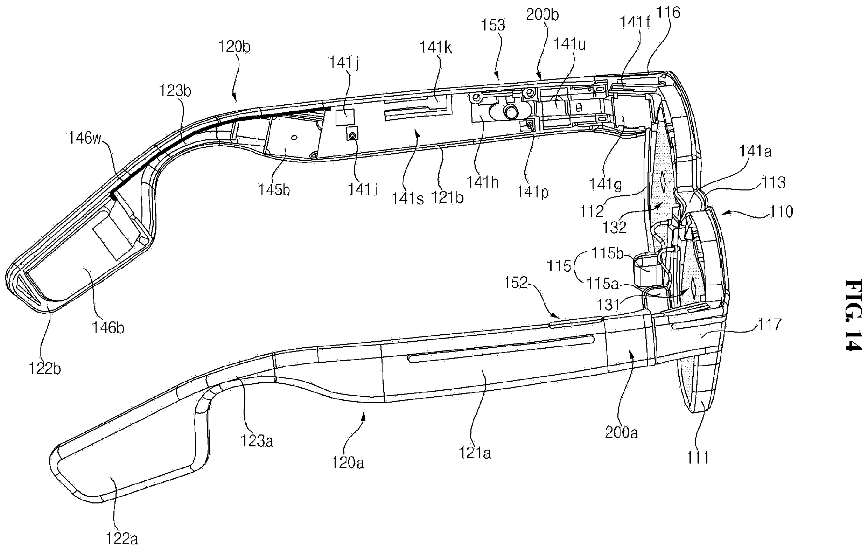

Referring to FIG 14, the second display connector 141f and the second display board 141g may be embedded in the second end piece 116. The flat board 141s may be embedded in the temple tip 121b of the second side frame 120b. The second side frame 121b of the second side frame 120b may be hinge-connected to the second end piece 116 (200b). The second hinge 200b may hinge-connect the second side frame 120b to the second end piece 116.

The second hinge FPCB 141u connecting the second display board 141g and the flat board 141s may be embedded in the second hinge 200b and/or the temple 121b of the second side frame 120b. The power switch 153 may be embedded in the temple 121b of the second side frame 120b, and the switching button 153b (see FIG 12) may be exposed to the outside by the temple 121b in the second side frame 120b.

The second speaker 145b may be embedded in the temple 121b of the second side frame 120b. The second battery 146b may be embedded in the temple tip 122b of the second side frame 120b. The electrical wire 146w may electrically connect the second battery 146b to the sub PCB 141 (see FIG 3). For example, the electric wire 146w may be embedded in the second temple tip 122b, the ear portion 123b, and/or the second temple 121b, and electrically connect the second battery 146b to the second power connector 141j of the sub PCB 141.

The weight of the battery 146b may be relatively heavy by other electronic components. The battery 146b may be embedded in the temple tip 122b, and other electronic components may be embedded in the front frame 110 and the temple 121b. As a result, when the user wears the electronic device 100 on his/her face, the weight of the electronic device 100 is distributed around the user's ear, so that the electronic device 100 may be stably worn by the user.

Referring to FIGS. 1 to 14, the electronic device may include: a front frame to which a light-transmissive display unit is coupled; temples elongated and connected to the front frame; and temple tips, which are connected to the distal ends of the temples and face the front frame with respect to the temples, and the front frame may include: a PCB, which is embedded in the front frame and extends toward the temples from the front frame; and a display panel, which is embedded in the front frame at one side of the display unit and is electrically connected to the PCB,

and the temple tips may include batteries, which are embedded in the temple tips, are electrically connected to the PCB, and supply power.

The front frame may include: a first rim forming a first opening; a second rim adjacent to the first rim and forming a second opening; and a bridge located between the first rim and the second rim, and connecting the first rim to the second rim, the display unit may include: a first display unit coupled to the first opening; and a second display unit coupled to the second opening, and the display panel may include: a first display panel located on one side of the first display unit, embedded in the first rim, and electrically connected to the PCB; and a second display panel located on one side of the second display unit, embedded in the second rim, and electrically connected to the PCB.

The front frame may include: a first end piece which faces the bridge with respect to the first rim and is formed on the first rim; and a second end piece which faces the bridge with respect to the second rim and is formed on the second rim, the temple may include: a first temple hinge-connected to the first end piece; and a second temple hinge-connected to the second end piece, the temple tip may include: a first temple connected to a distal end of the first temple; and a second temple connected to a distal end of the second temple, and the battery may include: a first battery embedded in the first temple tip; and a second battery embedded in the second temple tip.

The PCB may include: sub-FPCBs embedded in the main frame and the second temple; and a main PCB embedded in the first temple and electrically connected to the sub-FPCBs, the first battery may be electrically connected to the main PCB, and the second battery may be electrically connected to the sub-FPCBs.

The sub-FPCB may include: a main line embedded in the first rim, the second rim, and the bridge and extended from the first end piece toward the second end piece; a first display connector embedded in the first end piece and electrically connected to the main line; and a second display connector embedded in the second end piece and electrically connected to the main line, and the first display panel may be electrically connected to the first display connector, and the second display panel may be electrically connected to the second display connector.

The electronic device may further include: a first display engine providing display information to the first display panel; and a second display engine providing display information to the second display panel, the sub-FPCB may include: a first display board embedded in the first end piece, electrically connected to the first display connector, and on which the first display engine is mounted; and a second display board embedded in the second end piece, electrically connected to the second display connector, and on which the second display engine is mounted.

The electronic device may further include: a main camera sensing an external environment of the main frame; and an illuminance sensor sensing an external brightness of the main frame, the sub-FPCB may include: a camera module connector embedded in the first end piece and connected to the first display board; and a sensor connector embedded in the second end piece and connected to the second display connector, and the main camera may be electrically connected to the camera module connector, may be embedded in the first end piece, and may photograph an external environment of the first end piece, and the illuminance sensor may be electrically connected to the sensor connector, is embedded in the second end piece, and senses external light of the second end piece.

The sub-FPCB may further include: an electrode board connected to the second display connector, embedded in the second end piece, and including a plurality of electrodes, and the second end piece may include a plurality of electrode openings which expose the plurality of electrodes to the outside.

The electronic device may further include a camera switch installed in the main PCB, electrically connected to the main camera, and adjusting photographing of the main camera.

The electronic device may further include a touch pad embedded in the first temple and electrically connected to the main PCB, and the touch pad may include: a touch panel located between an outer surface of the first temple and the main PCB; and a panel electrode electrically connecting the touch panel and the main PCB.

The electronic device may further include a power switch electrically connected to the sub-FPCB, and the sub-FPCB may include a flat board embedded in the second temple, on which the power switch is mounted, and electrically connected to the power switch, and the power switch may include: a base mounted on the flat board; and a switching button slidable at the base and exposed to the outside of the second temple.

The electronic device may include: a first speaker embedded in the first temple, electrically connected to the main PCB, and outputting sound; and a second speaker embedded in the second temple, electrically connected to the sub-PFCB, and outputting sound.

The temple may further include: a first ear portion forming a distal end of the first temple and connected to the first temple tip; and a second ear portion forming a distal end of the second temple and connected to the second temple tip, and the first battery may be electrically connected to the main PCB by a first electric wire that is wired inside the first ear portion, and the second battery may be electrically connected to the sub-FPCB by a second electric wire that is wired inside the second ear portion.

The electronic device may further include: a first speaker embedded in the first temple adjacent to the first ear portion, electrically connected to the main PCB, and outputting sound; and a second speaker embedded in the second temple adjacent to the second ear portion, electrically connected to the sub-FPCB, and outputting sound.

Information provided by the display panel may be displayed on a light transmission path of the display unit.

Certain embodiments or other embodiments of the present disclosure described above are not mutually exclusive or distinct from each other. Any or all elements of the embodiments of the present disclosure described above may be combined or combined with each other in configuration or function.

For example, it is meant that a configuration "A" described in a specific embodiment and/or the drawings and a configuration "B" described in another embodiment and the drawings may be combined with each other. In other words, although the combination between the configurations is not directly described, the combination is possible except in the case where it is described that the combination is impossible.

The aforementioned detailed description should not be construed as restrictive in all terms and should be exemplarily considered. The scope of the present disclosure should be determined by rational construing of the appended claims and all modifications within an equivalent scope of the present disclosure are included in the scope of the present disclosure.

## Claims

1. An electronic device comprising:
a front frame to which a light-transmissive display unit is coupled;
temples elongated and connected to the front frame; and
temple tips, which are connected to the distal ends of the temples and face the front frame with respect to the temples,
wherein the front frame includes:
a PCB, which is embedded in the front frame and extends toward the temples from the front frame; and
a display panel, which is embedded in the front frame at one side of the display unit and is electrically connected to the PCB, and
wherein the temple tips include batteries, which are embedded in the temple tips, are electrically connected to the PCB, and supply power.

2. The electronic device of claim 1, wherein the front frame includes:
a first rim forming a first opening;
a second rim adjacent to the first rim and forming a second opening; and
a bridge located between the first rim and the second rim, and connecting the first rim to the second rim,
wherein the display unit includes:
a first display unit coupled to the first opening; and
a second display unit coupled to the second opening, and
wherein the display panel includes:
a first display panel located on one side of the first display unit, embedded in the first rim, and electrically connected to the PCB; and
a second display panel located on one side of the second display unit, embedded in the second rim, and electrically connected to the PCB.

3. The electronic device of claim 2, wherein the front frame includes:
a first end piece which faces the bridge with respect to the first rim and is formed on the first rim; and
a second end piece which faces the bridge with respect to the second rim and is formed on the second rim,
wherein the temple includes:
a first temple hinge-connected to the first end piece; and
a second temple hinge-connected to the second end piece,
wherein the temple tip includes:
a first temple connected to a distal end of the first temple; and
a second temple connected to a distal end of the second temple, and
wherein the battery includes:
a first battery embedded in the first temple tip; and
a second battery embedded in the second temple tip.

4. The electronic device of claim 3, wherein the PCB includes:
sub-FPCBs embedded in the main frame and the second temple; and
a main PCB embedded in the first temple and electrically connected to the sub-FPCBs,
wherein the first battery is electrically connected to the main PCB, and
wherein the second battery is electrically connected to the sub-FPCBs.

5. The electronic device of claim 4, wherein the sub-FPCB includes:
a main line embedded in the first rim, the second rim, and the bridge and extended from the first end piece toward the second end piece;
a first display connector embedded in the first end piece and electrically connected to the main line; and
a second display connector embedded in the second end piece and electrically connected to the main line, and
wherein the first display panel is electrically connected to the first display connector, and
wherein the second display panel is electrically connected to the second display connector.

6. The electronic device of claim 5, further comprising:
a first display engine providing display information to the first display panel; and
a second display engine providing display information to the second display panel,
wherein the sub-FPCB includes:
a first display board embedded in the first end piece, electrically connected to the first display connector, and on which the first display engine is mounted; and
a second display board embedded in the second end piece, electrically connected to the second display connector, and on which the second display engine is mounted.

7. The electronic device of claim 6, further comprising:
a main camera sensing an external environment of the main frame; and
an illuminance sensor sensing an external brightness of the main frame,
wherein the sub-FPCB includes:
a camera module connector embedded in the first end piece and connected to the first display board; and
a sensor connector embedded in the second end piece and connected to the second display connector, and
wherein the main camera is electrically connected to the camera module connector, is embedded in the first end piece, and photographs an external environment of the first end piece, and
wherein the illuminance sensor is electrically connected to the sensor connector, is embedded in the second end piece, and senses external light of the second end piece.

8. The electronic device of claim 7, wherein the sub-FPCB further includes:
an electrode board connected to the second display connector, embedded in the second end piece, and including a plurality of electrodes, and
wherein the second end piece includes a plurality of electrode openings which expose the plurality of electrodes to the outside.

9. The electronic device of claim 7, further comprising:
a camera switch installed in the main PCB, electrically connected to the main camera, and adjusting photographing of the main camera.

10. The electronic device of claim 4, further comprising:
a touch pad embedded in the first temple and electrically connected to the main PCB,
wherein the touch pad includes:
a touch panel located between an outer surface of the first temple and the main PCB; and
a panel electrode electrically connecting the touch panel and the main PCB.

11. The electronic device of claim 4, further comprising:
a power switch electrically connected to the sub-FPCB,
wherein the sub-FPCB includes a flat board embedded in the second temple, on which the power switch is mounted, and electrically connected to the power switch, and
wherein the power switch includes:
a base mounted on the flat board; and
a switching button slidable at the base and exposed to the outside of the second temple.

12. The electronic device of claim 4, comprising:
a first speaker embedded in the first temple, electrically connected to the main PCB, and outputting sound; and
a second speaker embedded in the second temple, electrically connected to the sub-FPCB, and outputting sound.

13. The electronic device of claim 4, wherein the temple further includes:
a first ear portion forming a distal end of the first temple and connected to the first temple tip; and
a second ear portion forming a distal end of the second temple and connected to the second temple tip, and
wherein the first battery is electrically connected to the main PCB by a first electric wire that is wired inside the first ear portion, and
wherein the second battery is electrically connected to the sub-FPCB by a second electric wire that is wired inside the second ear portion.

14. The electronic device of claim 13, further comprising:
a first speaker embedded in the first temple adjacent to the first ear portion, electrically connected to the main PCB, and outputting sound; and
a second speaker embedded in the second temple adjacent to the second ear portion, electrically connected to the sub-FPCB, and outputting sound.

15. The electronic device of claim 1, wherein information provided by the display panel is displayed on a light transmission path of the display unit.
